# NEUE EUROPÄISCHE PATENTSCHRIFT

(11) **EP 1 780 000 B2**
(45) Veröffentlichungstag und Bekanntmachung des Hinweises auf die Entscheidung über den Einspruch: **26.03.2025**
(45) Hinweis auf die Patenterteilung: 29.12.2010
(21) Anmeldenummer: 06015494.5
(22) Anmeldetag: 14.10.2005
(51) Int. Cl.: B31B 70/00, B29C 65/18, B29C 65/78, B29C 65/74

(54) **Vorrichtung und Verfahren zur Herstellung von Kunststoffbeuteln**
Device and procedure for the production of plastic bags
Dispositif et procédure de fabrication des sacs de matière plastique

(30) Priorität: 15.10.2004 DE 102004050603; 22.10.2004 DE 102004051556
(43) Veröffentlichungstag der Anmeldung: 02.05.2007
(62) Teilanmeldung aus: 05807746.2
(73) Patentinhaber: PLÜMAT PLATE & LÜBECK GMBH & CO, 32339 Espelkamp (DE)
(72) Erfinder: Puller, Stefan, 32339 Espelkamp (DE); Muth, Friedrich, 32339 Espelkamp (DE)
(74) Vertreter: Sonnenberg Harrison Partnerschaft mbB

(56) Entgegenhaltungen:
- EP-A2- 0 999 141
- DE-A1- 1 486 977
- DE-A1- 19 958 952
- DE-C1- 19 634 944
- DE-T2- 69 504 472
- FR-A1- 2 627 128
- US-A- 3 244 576
- US-A- 3 283 671
- US-A- 4 352 669

## Beschreibung

### Gebiet der Erfindung

Die vorliegende Erfindung liegt auf dem Gebiet der Kunststoffverarbeitung und der Anlagentechnik. Die vorliegende Erfindung betrifft eine Vorrichtung und ein Verfahren zur Herstellung von Kunststoffbeuteln mit einem oder mehreren Ports bzw. Kunststoffelementen.

### Hintergrund der Erfindung

Kunststoffbeutel, häufig in Form von Folienbeuteln, werden im Bereich der Medizin eingesetzt. Ihre Verwendungsmöglichkeiten sind vielfältig. Kunststoffbeutel können zur Aufnahme von Infusionslösungen dienen und werden unter anderem auch für die Aufbewahrung von Blut (Blutkonserven) und die Aufbewahrung von sterilen medizinischen Flüssigkeiten benutzt. Kunststoffbeutel benötigen Befüllungs- und Entnahmesysteme, die als sogenannte Ports ausgeführt sind, wobei die Kunststoffbeutel je nach Verwendungszweck ein, zwei oder mehrere Ports aufweisen können. Jeder Port kann, je nach vorgesehener Verwendungsart, eine spezielle Formgebung und/oder individuelle Konstruktionsbestandteile haben.

Kunststoffbeutel mit Ports sind z. B. aus den Schriften DE 196 34 944 C1 und DE 199 58 952 A1 bekannt. Dort werden Herstellungsverfahren beschrieben, bei denen ein einstückiges Einsatzstück aus Kunststoff in den Randbereich eines aus zwei übereinanderliegenden Kunststofffolien gebildeten Kunststoffbeutels eingeschweißt wird. Das Einsatzstück besteht aus einem massiven Stück Kunststoff von ausreichender Querschnittsgröße, sodass in dem Einsatzstück wahlweise ein, zwei oder mehrere Ports mit jeweils zylinderförmig kreisrundem Durchströmungsquerschnitt unterzubringen sind.

Ports können in Kunststoffbeuteln mit verschiedenen Arten von Kunststoffelementen realisiert werden. Kunststoffelemente können als extrudierte Schläuche, z.B. aus Polypropylen mit oder ohne eine innere Schicht aus EVA, ausgebildet sein. Kunststoffelemente können auch als Spritzgussteile, z.B. aus Polypropylen, ausgebildet sein.

Die Herstellung von Kunststoffbeuteln erfolgt in bekannter Weise mit einem Herstellungsverfahren, bei dem zwei miteinander zu verschweißende Kunststofffolien einem Schweiß/Schneidwerkzeug zugeführt werden, das ein- oder mehrnutzig sein kann, d.h. dessen Werkzeugform für ein oder mehrere Kunststoffbeutel ausgelegt sein kann. Die Zuführung der miteinander zu verschweißenden Kunststoff-Folien erfolgt in Form von planparallel übereinanderliegenden Endlos-Kunststofffolien, die üblicherweise als geblasener Endlos-Schlauch ungeschnitten oder in Bahnen geschnitten von einer Rolle abgezogen und mittels Tänzerwalzen gestreckt gehalten werden, wobei durch bekannte Mittel (z. B. durch eine Folienklemme) sichergestellt ist, dass das Zuführungsende der Kunststofffolien lagegenau an der Eingangsseite des aus zwei Werkzeughälften gebildeten Schweiß-/Schneidwerkzeuges positioniert ist.

Sodann werden die Werkzeughälften auseinander gefahren und die Kunststofffolien werden durch das geöffnete Werkzeug hindurchgezogen Zu diesem Zweck greifen üblicherweise Vakuumsauger durch das geöffnete Werkzeug hindurch und erfassen das an der Eingangsseite des Werkzeuges lagegenau positionierte Zuführungsende der Kunststofffolien und ziehen dieses Zuführungsende bis auf die Ausgangsseite durch das geöffnete Werkzeug hindurch, woraufhin beim oder kurz nach dem Zufahren (Schließen) der Werkzeughälften die Schweißnähte zwischen den Kunststofffolien konturengenau entsprechend der Form des oder der Kunststoffbeutel hergestellt werden und zugleich mittels Trennmesser, die in das Schweiß-/Schneidwerkzeug eingebaut sind, die Kunststoffbeutel freigeschnitten und von den noch frischen (unverschweißten) Kunststofffolien abgetrennt werden, derart, dass ein neues Zuführungsende der Kunststofffolien an der Eingangsseite des Schweiß-/Schneidwerkzeuges positioniert ist.

Aus der Offenlegungsschrift DE 1 486 977 ist eine Maschine zum Herstellen von Verpackungsbeuteln für Verpackungsgüter mit runden Ecken bekannt. Die Maschine verfügt über eine Schneid- und Schweißvorrichtung, welche Abschnitte der Folie abschneidet und gleichzeitig die Schnittkanten zuschweißt, um abgerundete Ecken an den Beuteln zu erzielen. Dabei werden die einzelnen Beutel nicht voneinander getrennt, sondern die zusammenhängende Folie wird nach dem Schweißen über Bänder und Walzen geführt, bevor sie an einer separaten Trennstation in einzelne Beutel zertrennt wird.

Aus der FR 2 627 128 ist zudem ein Verfahren und eine Maschine zur Herstellung von thermoschweißbaren Kunststoffbeuteln bekannt, bei der zunächst eine schlauchförmige Folie in zwei Folienbahnen geeigneter Größe geschnitten wird, bevor sie in einem nächsten Schritt und Werkzeug die longitudinalen Ränder verschweißt werden. In einem weiteren separaten Werkzeug und Arbeitschritt werden dann die transversalen Ränder verschweißt. Danach wird die geschweißte Folie über ein Transportsystem weitertransportiert und gekühlt, bevor sie in einem weiteren Werkzeug in Beutel zertrennt wird. Auch in diesem System wird die Folie, an der verschiedene Arbeitsschritte ausgeführt werden, kontinuierlich durch die Maschine gezogen bevor sie an dessen Ende in einem separaten Arbeitschritt in Folienabschnitte zerteilt wird.

Aus der US 3,244,576 ist eine Vorrichtung und ein Verfahren zur Herstellung von flexiblen Beuteln bekannt. Die Beutel sind mit einem starren oder halbstarren Mundstück bzw. Stutzen versehen. Bei dem offenbarten Verfahren wird eine erste Materialbahn aus heißversiegelbarem Material (heißversiegelbarer Film) über eine waagrechte Platte bewegt. Danach wird an einer bestimmten Stelle an der Platte auf einem Abschnitt der ersten Materialbahn ein heißversiegelbares Mundstück bzw. Stutzen aufgebracht und gleichzeitig mit dem Abschnitt versiegelt, während, in Ausrichtung mit dem Mundstück, eine Öffnung mittels eines (Durch-)Schneidvorgangs (Durchstoßen) in dem Abschnitt gebildet wird. Nach einer weiteren Vorwärtsbewegung der ersten Materialbahn mit dem nun darauf angebrachten Mundstück wird anschließend eine zweite Materialbahn aus heißversiegelbarem Material in flächiger Berührung über die erste Materialbahn gelegt und entsprechend überlagerte Abschnitte entlang ihrer Randkanten verbunden, um den Beutel zu bilden. Der verbleibende Teil der Streifen wird danach abgetrennt. Die Vorrichtung zur Durchführung des Verfahrens weist eine, mit einer abgeschrägten Öffnung versehene, Platte sowie Walzen zum Vorwärtsbewegen der ersten Materialbahn über eine Fläche der Platte auf. Des Weiteren ist ein drehbares Schaltrad mit Aufnahmeeinheiten für Mundstücke zum Aufbringen der heißversiegelbaren Mundstücke auf die erste Materialbahn vorgesehen, welche der Öffnung der Platte gegenüberliegt und sich nahe der Oberfläche der Platte befindet. An der gegenüberliegenden Seite, d.h. an der Unterseite der Platte befindet sich, in Ausrichtung mit deren Öffnung und der Einrichtung zum Aufbringen des Mundstücks, ein ringförmiges, zylindrisches Heißversiegelungswerkzeug mit Heizelementen und Schneidelementen. Die Schneidelemente sind schräge Klingen in radialer Anordnung, um die erforderliche Öffnung zwischen dem Mundstück und dem Inneren des fertigen Beutels zu schaffen. Das Heißversiegelungswerkzeug wird durch einen pneumatischen Zylinder hin- und herbewegt. Daneben verfügt die Vorrichtung noch über eine weitere separate Schweiß- und Trennstation mit Walzen und einem Förderriemen zum Zuführen und Transportieren der zweiten Materialbahn an heißversiegelbarem Material und über eine Platte, um darauf die flexible erste Materialbahn mit dem Mundstück in Flächenberührung (an der dem Mundstück gegenüberliegenden Unter-, d.h. Innenseite) mit der zweiten Materialbahn auf der Platte zu bringen. Des Weiteren ist ein mit Heißversiegelungselementen versehenes Werkzeug, welches in senkrechter Richtung zu den überlagerten Materialbahnen bewegt werden kann, vorgesehen. Das Werkzeug ist gegen die auf der Platte befindlichen, übereinander liegenden Materialbahnen bewegbar, damit die Umfangsränder des Beutels durch das Werkzeug miteinander versiegelt werden können. Weiterhin kann dieses Werkzeug den fertig entstandenen Beutel nach dem Versiegelungsvorgang von den Materialbahnen abtrennen.

Die beschriebenen Herstellungsverfahren sind hinsichtlich der Details der Verfahrensabläufe und der dafür verwendeten Anlagen und Vorrichtungen vielfach optimiert worden. Jedoch ist es bisher nicht gelungen, eine wesentliche Leistungssteigerung bei der Kunststoffbeutelherstellung zu erreichen. Die zeitlichen Abläufe der einzelnen Verfahrensschritte des Schweißens und des Schneidens sowie ein positionsgenaues Handling der fertigen Kunststoffbeutel und ggf. deren Befüllung und Versiegelung sowie gewünschtenfalls deren Einbringung in einen Umbeutel erschienen nicht veränderbar.

### Kurzfassung der Erfindung

Aufgabe der Erfindung ist es, eine verbesserte Herstellung von Kunststoffbeuteln durch neue oder verbesserte Verfahrensschritte und neue oder verbesserte Vorrichtungen zu erreichen.

Diese und weitere Aufgaben werden durch eine Vorrichtung mit den Merkmalen des Anspruches 1 und ein Verfahren mit den Merkmalen des Anspruches 19 gelöst, bevorzugte Ausgestaltungen sind in den jeweiligen abhängigen Ansprüchen definiert.

Fig. 1 zeigt eine Skizze einer Ausführungsform einer Vorrichtung zur Herstellung von Kunststoffbeuteln;
Fig. 2 zeigt schematisch einen Kunststoffbeutel mit Port;
Fig. 3 zeigt schematisch ein Schweißwerkzeug;
Fig. 4 zeigt schematisch ein Schneidwerkzeug;
Fig. 5 a) und b) zeigen schematisch ein kombiniertes Schweiß-/Schneidwerkzeug;
Fig. 6 a) bis d) zeigen schematisch den Verfahrensablauf beim Umfahren eines kombinierten Schweiß-/Schneidwerkzeugs durch einen ersten Greifer und einen zweiten Greifer;
Fig. 7, Nr. 1 bis 10, zeigt detailliert einen Fertigungsablauf an einem kombinierten Schweiß-/Schneidwerkzeug;
Fig. 8 zeigt schematisch ein Dosierventil zur Befüllung von Kunststoffbeuteln;
Fig. 9 zeigt detailliert den Fertigungsablauf des Schwenkens der Kunststoffbeutel aus der Horizontalen in die Vertikale Lage nach dem Schweiß-/Trennvorgang.

### Beschreibung der Zeichnungen

### Detaillierte Beschreibung der Erfindung

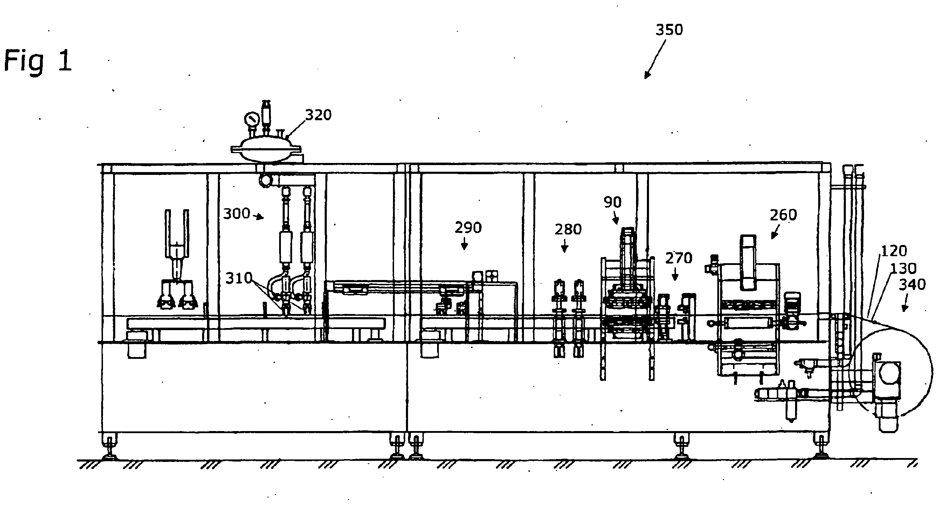

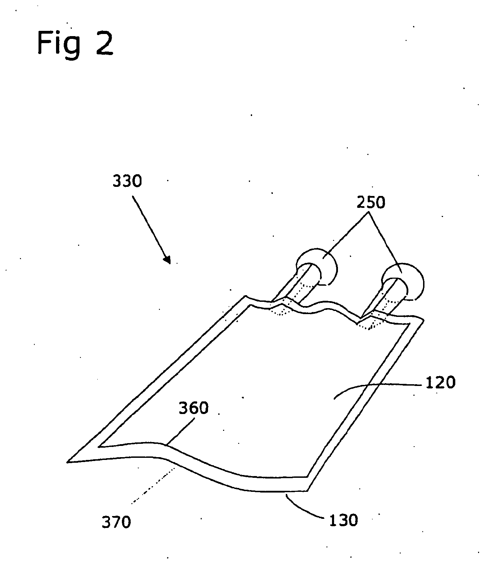

Fig. 1 zeigt beispielhaft eine Vorrichtung 350 zur Herstellung von Kunststoffbeuteln 330 sowie das damit verbundene Herstellungsverfahren. Ein Beispiel eines Kunststoffbeutels 330 ist in Fig. 2 dargestellt. Weitere Figuren zeigen detaillierter einzelne Bestandteile und/oder Verfahrensabläufe der Vorrichtung bzw. des Herstellungsverfahrens. Zwei Lagen einer Kunststofffolie 120, 130 werden von einem Folienspender 340 zur Verfügung gestellt. Die Kunststofffolien 120, 130 werden dabei von einer Trommel 342 abgerollt. Als Kunststofffolie 120, 130 kann z.B. eine dreischichtige Polypropylenfolie dienen.

Eine dreischichtige Polypropylenfolie kann aus Polypropylen und Kopolymeren gefertigt sein. Eine derartige dreischichtige Polypropylenfolie kann mit einer äußeren Schutzschicht, einer mittleren Barrierenschicht und einer inneren Schicht zum Verschweißen koextrudiert werden. In der Vorrichtung 350 liegen die beiden inneren Schichten der beiden Kunststofffolien 120, 130 aufeinander und die zwei Lagen der Kunststofffolien 120, 130 sind zusammen auf der Trommel 342 aufgerollt.

Vom Folienspender 340 gelangen die Kunststofffolien 120, 130 zu einer Folienbedruckeinheit 260. in der Folienbedruckeinheit 260 werden auf die Kunststofffolien 120, 130 Informationen über das Material der Kunststofffolien 120, 130, das Herstellungsdatum und Inhaltstoffe für die zu fertigenden Kunststoffbeutel 330 aufgedruckt.

Die zwei Lagen Kunststofffolie 120, 130 gelangen von der Folienbedruckeinheit 260 zum kombinierten Schweiß/Schneidwerkzeug bzw. Schweiß-/Trennwerkzeug 90. Ebenfalls in das kombinierte Schweiß/Schneidwerkzeug 90 werden Kunststoffelemente 250, die auf einem Nest 180 gehalten werden, eingebracht.

Mehrere der Nester 180 befinden sich fix auf einem Ersten Riemen und können mit dem Ersten Riemen befördert werden. Der Vorschub der Nester 180 ist zeitlich mit dem Takt des kombinierten Schweiß/ Schneidwerkzeugs 90 koordiniert. Während des Schweiß/Schneidschritts steht der Vorschub still. Eine Vorrichtung befüllt die Nester 180 mit Kunststoffelementen 250. Die Befüllung kann z.B. durch Hineindrücken in eine Passung in den Nestern 180 geschehen. Das Befüllen geschieht in der Stillstandsphase während eines Schweiß/Schneidschritts.

In einem der Nester 180 können eines oder mehrere Kunststoffelemente 250 gehalten werden. Im dargestellten Fall können zwei Kunststoffelemente 250 in dem Nest 180 gehalten werden. Die Kunststoffelemente 250 haben eine obere Position und eine untere Position, in der sie im Nest 180 gehalten werden können. Alternativ besteht die Möglichkeit, dass die Nester 180 selber oder Teile der Nester 180 eine obere Position und eine untere Position haben. Im Beispiel werden die Kunststoffelemente 250 in der oberen Position gehalten. In der oberen Position können die Nester 180 die Kunststoffelemente 250 über die untere Werkzeugplatte 100 des kombinierten Schweiß/Schneidwerkzeugs 90 führen. In der unteren Position der Kunststoffelemente 250 im Nest 180 kann das kombinierte Schweiß/Schneidwerkzeug 90 geschlossen werden.

Die Kunststoffelemente 250 durchlaufen vor dem kombinierten Schweiß/Schneidwerkzeug eine Vorwärmstation 270. Die Kunststoffelemente 250 befinden sich dabei auf den Nestern 180. In der Vorwärmstation 270 können die Kunststoffelemente 250 für einen verkürzten und verbesserten Schweißschritt im kombinierten Schweiß/Schneidwerkzeug 90 erwärmt werden. Das Verfahren wird so durchgeführt, dass sich während des Schneid/Schweißschritts die Kunststoffelemente 250, die an den nächsten Kunststoffbeuteln 330 im nächsten Schneid/Schweißschritt angebracht werden sollen in der Vorwärmstation 270 befinden. Die Vorwärmstation 270 ist so aufgebaut, dass vier Kunststoffelemente 250, die sich in zwei Nestern 180 befinden gleichzeitig erwärmt werden können.

Nach oder beim Öffnen des kombinierten Schweiß/Schneidwerkzeugs 90 wird der Vorschub des ersten Riemens wieder in Gang gesetzt. Die vier Kunststoffelemente 250 auf den zwei Nestern 180 werden in das kombinierte Schweiß/Schneidwerkzeug 90 eingebracht.

Im kombinierten Schweiß/Schneidwerkzeug 90 werden die Kunststoffelemente 250 mit einem Endbereich zwischen die zwei Lagen der Kunststofffolien 120, 130 einbebracht. In der dargestellten Ausführungsform der Erfindung werden vier Kunststoffelemente 250 zur Formung von vier Ports an zwei Kunststoffbeuteln 330 in das kombinierte Schweiß/Schneidwerkzeug 90 eingebracht. Die Kunststofffolien 120, 130 liegen weitgehend auf einer unteren Werkzeugplatte 100. Die ebene untere Werkzeugplatte 100 wird mit Heizelementen auf einer konstanten Temperatur von ungefähr 100 °C gehalten. Diese Temperatur liegt unterhalb der Erweichungstemperatur der Kunststofffolien 120, 130. Dadurch können die Kunststofffolien 120, 130 problemlos über die untere Werkzeugplatte 100 gleiten, ohne darauf "anzukleben". Die untere Werkzeugplatte 100 ist aus hartem und/oder gehärtetem Stahl gefertigt. Die untere Werkzeugplatte 100 ist auswechselbar und unbeweglich an der Vorrichtung 350 montiert.

In den Bereichen der unteren Werkzeugplatte 100, in denen die Kunststoffelemente 250 auf der unteren Kunststofffolie 130 aufliegen, befinden sich Einsätze 380 in der unteren Werkzeugplatte 100. Die Einsätze 380 haben eine Vertiefung, um beim Pressen der oberen Werkzeugplatte 110 auf die untere Werkzeugplatte 100 die Dicke der Kunststoffelemente 250 auszugleichen. Die Einsätze 380 haben eine von der restlichen unteren Werkzeugplatte 100 separat regelbare Heizung. In einer bevorzugten Ausführungsform nimmt ein Einsatz 380 mit zwei Vertiefungen 2 Kunststoffelemente 250 für einen Kunststoffbeutel 330 auf. Die separat regelbare Heizung hilft die Kunststoffelemente 250 an die Kunststofffolie 120,130, insbesondere an die untere Kunststofffolie 130, anzuschweißen. Mit der separat regelbaren Heizung können im Bereich der Einsätze 380 der unteren Werkzeugplatte 100 Temperaturen, z.B. 140 °C, oberhalb der Schmelztemperatur der verwendeten Materialien für die Kunststofffolien 120, 130 erzielt werden. Die Einsätze 380 in der unteren Werkzeugplatte 100 sind auswechselbar und unbeweglich an der Vorrichtung 350 montiert. Die Einsätze 380 können für andere Formen von Kunststoffbeuteln 330 ausgetauscht werden oder wegen Verschleiß ersetzt werden.

Die obere Werkzeugplatte 110 des kombinierten Schweiß/Schneidwerkzeugs 90 umfasst eine Stahlträgerplatte, auf der eine mit Schweißformen 40 geformte Aluminiumheizplatte 115 und Trennvorrichtungen, die eine Schneidform 80 bilden, montiert sind. Als Trennvorrichtungen dienen messerartige Stahlstücke, die die Kunststofffolien 120, 130 durchschneiden und so die Kunststoffbeutel 330 aus den Kunststofffolien 120, 130 ausschneiden. Die geformte Aluminiumheizplatte 115 hat eine schnelle Temperaturregelung, mit der Temperaturen, z.B. 140 °C, oberhalb des Schmelzpunktes der verwendeten Materialien der Kunststofffolien 120, 130 eingestellt und gehalten werden können. Die Aluminiumheizplatte 115 hat, wie die untere Werkzeugplatte 100, Vertiefungen in dem Bereich in dem sie beim Zusammenfahren des kombinierten Schweiß/Schneidwerkzeugs 90 auf die Kunststoffelemente 250 gedrückt wird. Die Trennvorrichtungen, welche die Schneidform 80 bilden, sowie die geformte Aluminiumheizplatte 115 können ausgewechselt werden. Durch Auswechseln der Trennvorrichtungen und der Aluminiumheizplatte 115 können unterschiedliche Formen von Kunststoffbeuteln hergestellt werden oder verschlissene Werkzeugteile ersetzt werden.

Die obere Werkzeugplatte 110 ist an der Vorrichtung 350 mit Pressvorrichtungen verbunden: Dadurch kann die obere Werkzeugplatte 110 auf die unbeweglich montierte untere Werkzeugplatte 100 gedrückt werden.

Beim Zusammendrücken werden die, durch die untere Werkzeugplatte 100 vorgewärmten, Kunststofffolien 120, 130 mit den in der Vorwärmstation 270 vorgewärmten Kunststoffelementen 250 durch die Wärmezufuhr in den Einsätzen 380 der unteren Werkzeugplatte 100 und der Aluminiumheizplatte 115 der oberen Werkzeugplatte 110 verschweißt und durch die Trennvorrichtungen entlang der Schneidform 40 geschnitten. Bei dieser Ausführungsform wird der Schneidvorgang nur teilweise durchgeführt. Die im Wesentlichen ausgeschnittenen Kunststoffbeutel 250 hängen noch mit den Überresten der Kunststofffolien 120, 130 zusammen. Die Kunststoffelemente 250 werden beim Zusammenfahren des kombinierten Schweiß/Schneidwerkzeugs 90 in die untere Position gedrückt. In der unteren Position befinden sich die Kunststoffelemente dann zumindest teilweise in der Vertiefung der Einsätze 380 der unteren Werkzeugplatte 100.

Die gefertigten Kunststoffbeutel 330 werden anschließend aus dem kombinierte Schweiß/Schneidwerkzeug 90 auf den Nestern 180 herausgezogen. Dazu werden die nun am Kunststoffbeutel 330 angebrachten Kunststoffelemente 250 wieder in die obere Position der Nester 180 gedrückt und der Vorschub des ersten Riemens wird betätigt. Zusammen mit den Nestern 180 werden die gehalterten Kunststoffelemente 250, wobei im Beispiel die zwei Kunststoffelemente 250, die mit einem Kunststoffbeutel 330 verbunden sind in einem Nest gehalten werden, und damit die Kunststoffbeutel 330 aus dem kombinierten Schweiß/Schneidwerkzeug 90 herausgezogen. Die Überreste der Kunststofffolien 120, 130, die noch mit den Kunststoffbeuteln 330 zumindest teilweise zusammenhängen, werden dabei ebenfalls aus dem kombinierten Schweiß/Schneidwerkzeug 90 herausgezogen.

Die gefertigten Kunststoffbeutel 330 werden an den Nestern einer Nachschweißstation 280 zugeführt. In der Nachschweißstation 280 wird die Verbindung der Kunststoffelemente 250 mit dem aus den Kunststofffolien 120, 130 gefertigten Kunststoffbeutel 330 nochmals erwärmt. Durch das nochmalige Erwärmen des Verbindungsbereichs der Kunststoffelemente 250 mit den Kunststoffbeuteln 330 wird der Verbindungsbereich weiter abgedichtet.

Während die Kunststoffbeutel 330 an den Nestern 180 gehalten werden, entfernt ein Entferner die Überreste der Kunststofffolien 120, 130 und reißt diese von den Kunststoffbeuteln 330 ab. Das Entfernen kann z.B. mit einem dritten Greifer geschehen. Während der Stillstandspause eines Schweiß/Schneidschritts (d.h. der erste Riemen und damit die Nester 180 werden nicht bewegt) ergreift der dritte Greifer mit Greiffingem die Überreste der Kunststofffolien 120, 130 und reißt die Überreste von den an den Nestern 180 gehalterten Kunststoffbeuteln 330 ab.

In der beschriebenen Ausführungsform der Erfindung werden die Kunststoffbeutel 330 dann in einer Transferstation 290 aus den Nestern 180 herausgeschoben, aus der Horizontalen in die Vertikale geschwenkt und an weitere Nestern 185 übergeben. In den weiteren Nestern 185, die sich auf einem zweiten Riemen befinden, werden die Kunststoffbeutel 330 der Beutelfüllmaschine 300 zugeführt.

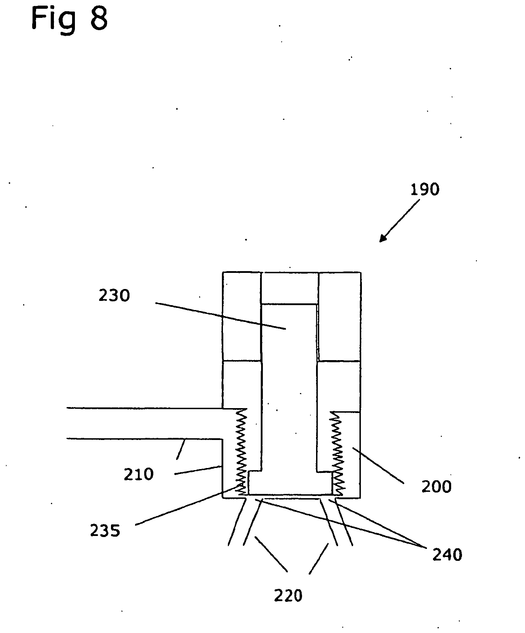

In der Befüllmaschine 300 werden Befüllvorrichtungen 310 auf oder über die Ports gesetzt und eine Flüssigkeit 200 kann in die Kunststoffbeutel 250 eingefülltwerden. In der beschriebenen Ausführungsform wird das Befüllen an beiden Ports eines Kunststoffbeutels 330 gleichzeitig vorgenommen. Die Dosierung der Menge der Flüssigkeit 200 kann in einer Ausführungsform über eine Zeitsteuerung eines Dosierventils 190 (in Fig. 8 dargestellt) geschehen. Damit in gleichen Zeiträumen gleiche Mengen der Flüssigkeit 200 eingefüllt werden können, wird die Flüssigkeit 200 mit einem Druckausgleichsbehälter 320 auf konstantem Druck (zwischen 2 und 6 bar) gehalten. Alternativ zur Zeitsteuerung kann zwischen Druckausgleichstank und Dosierventil ein Massedurchflussmesssystem vorhanden sein. Das Massedurchflussmesssystem misst die Flüssigkeit und schließt das Dosierventil 190, sobald die gewünschte Menge der Flüssigkeit 200 in den Beutel eingefüllt ist. Mit diesem Massendurchflussmesssystem kann die Genauigkeit der Dosierung noch erhöht werden. Nach der Befüllung werden die Kunststoffbeutel 330, immer noch an den weiteren Nestern 180, einer Verschlussstation zugeführt. In der Verschlussstation können die Kunststoffbeutel 330 mit Kappen verschlossen werden. Der Verschluss mit Kappen kann durch Aufdrücken von Kappen mit Dichtungen vorgenommen werden. Alternativ ist auch eine Verschlussstation möglich, bei der Kappen auf die Kunststoffbeutel 330 aufgeschweißt werden.

In Fig. 2 ist ein Kunststoffbeutel 330 mit zwei durch Kunststoffelemente 250 gebildeten Ports dargestellt. Die Kunststoffelemente 250 sind zwischen zwei Lagen Kunststofffolie, 120, 130 eingeschweißt. Ein solcher Kunststoffbeutel 330 kann Volumina zwischen typischerweise 100 ml und 3000 ml umfassen. Die innere Umrandung des Kunststoffbeutels 330 ist durch die Verschweißung des Kunststoffbeutels 330 definiert. Die äußere Umrandung ist durch das Schneiden des Kunststoffbeutels 330 definiert.

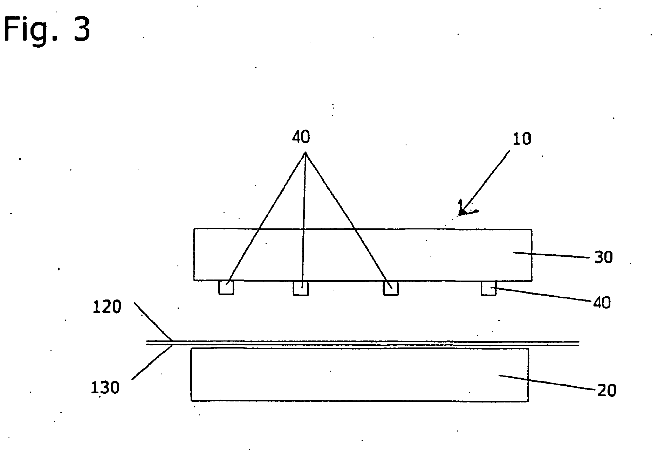

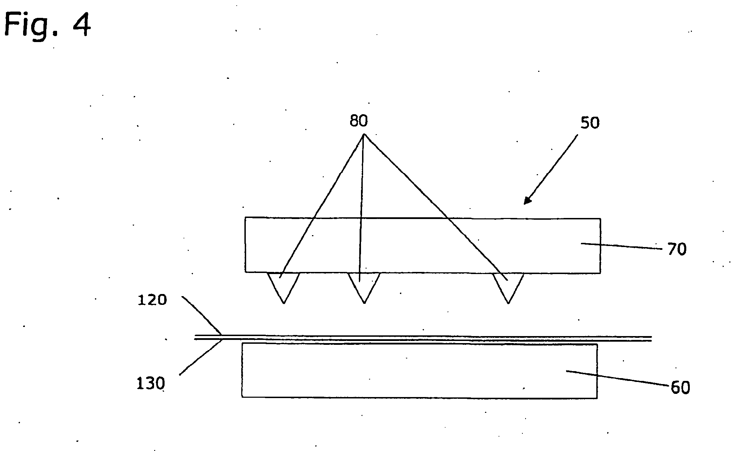

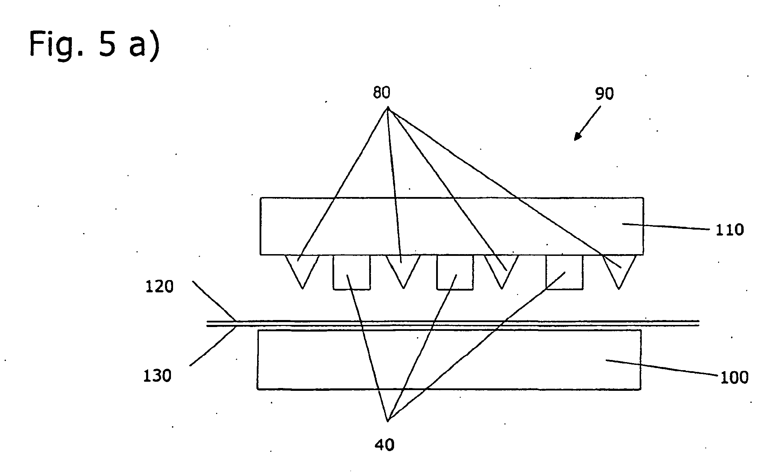

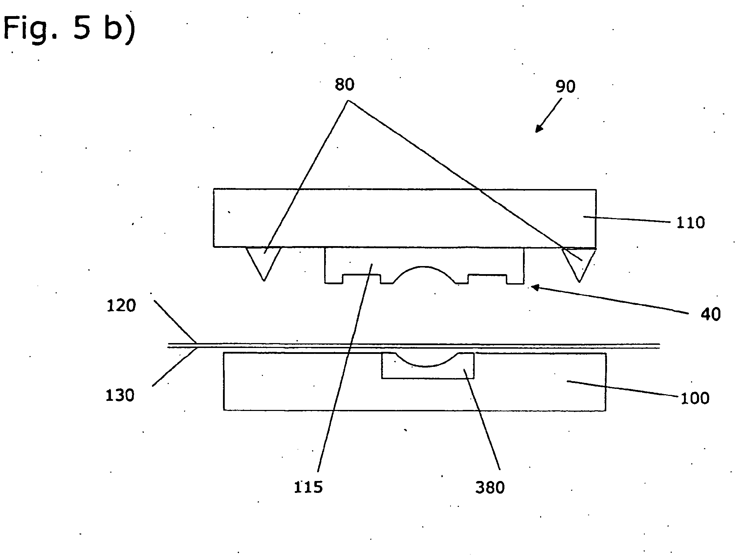

In Fig. 3, ist ein Schweißwerkzeug 10 und in Fig. 4 ist ein Schneidwerkzeug 50 für die Vorrichtung 350 zur Herstellung von Kunststoffbeuteln 330 dargestellt. In Fig. 5 a) und b) ist ein kombiniertes Schweiß/Schneidwerkzeug 90 für eine Vorrichtung 350 zur Herstellung von Kunststoffbeuteln 330 dargestellt. Alle drei Werkzeuge 10, 50, 90 haben jeweils eine untere ruhende Platte (die untere Schweißwerkzeugplatte 20, die untere Schneidwerkzeugplatte 60 und die untere Werkzeugplatte 100) sowie eine bewegbare, auf die untere ruhende Platte aufpressbare obere Platte (die obere Schweißwerkzeugplatte 30, die obere Schneidwerkzeugplatte 70 und die obere Werkzeugplatte 110). Im Folgenden werden bevorzugte Ausführungsformen des bevorzugten kombinierten Schweiß/Schneidwerkzeugs 90 beschrieben.

Die untere Werkzeugplatte 100 des kombinierten Schweiß/Schneidwerkzeugs 90 ist als ruhend an der Vorrichtung 350 angebrachte Platte aus gehärtetem Stahl gefertigt. Die untere Werkzeugplatte ist ungefähr 500 mm breit und 500 mm lang bei einer Dicke von ungefähr 10 mm. Die untere Werkzeugplatte 100 ist mit einer Heizvorrichtung, z.B. elektrische Heizschlangen ausgestattet sowie mit einem oder mehreren oberflächennahen Temperaturfühlern ausgestattet. Mit den Daten der Temperaturfühler kann die Heizung und somit die Temperatur der unteren Werkzeugplatte 100 geregelt werden. Bevorzugterweise wird die Temperatur der unteren Werkzeugplatte 100 auf einen konstanten Wert eingestellt. In einer bevorzugten Ausführungsform umfasst die untere Werkzeugplatte 100 seinen Einsatz 380 in einem Bereich, in dem Kunststoffelemente 250 an die Kunststoffbeutel 330 angeschweißt werden sollen. Dieser Einsatz 380 kann aus einem anderen Material wie die untere Werkzeugplatte 100 gefertigt sein, z.B. aus Aluminium. Der Einsatz 380 kann mit einer von der Heizung der unteren Werkzeugplatte 90 getrennten Heizung, Temperaturerfassung und Temperaturregelung ausgestattet sein. Der Einsatz 380 in Fig. 5 b) hat eine an das einzuschweißende Kunststoffelement 250 angepasste Vertiefung. Der Vertiefung steht eine entsprechende Vertiefung in der geformten oberen Werkzeugplatte gegenüber. Durch die Vertiefungen kann das kombinierte Schweiß/Schneidwerkzeug 90, trotz eines zwischenliegenden Anteils eines Kunststoffelements 250, so weit zusammengefahren werden, dass die Kunststofffolien 120, 130 zusammengedrückt werden.

Die geformte obere Werkzeugplatte 110 des kombinierten Schweiß/Schneidwerkzeugs 90 umfasst in Fig. 5 b) Trennvorrichtungen, die messerartig als Schneidform 80 ausgebildet sind. Diese Trennvorrichtungen sind bevorzugterweise abschraubbar an der oberen Werkzeugplatte 110 angebracht. Die Trennvorrichtungen können bei gewünschten geänderten Formen und/oder Größen von Kunststoffbeuteln 330 ausgetauscht werden. Die Trennvorrichtungen können bei Verschleiß, z.B. Abstumpfen ausgetauscht werden. Auf die obere Werkzeugplatte ist in Fig. 5 b) eine Schweißform 40 angebracht. Die Schweißform 40 ist bevorzugt aus Aluminium gefertigt, um eine hohe Temperaturregelgeschwindigkeit zu ermöglichen. Die Schweißform 40 umfasst ein Heizsystem, z.B. elektrische Heizschlangen, und oberflächennahe Temperaturfühler. Bevorzugterweise ist eine schnelle Temperaturregelung für die obere Werkzeugplatte 110 möglich. Dadurch kann eine voreingestellte Temperatur auch beim Zusammenfahren der oberen Werkzeugplatte 110 auf die untere Werkzeugplatte 100 und dem dadurch entstehenden Wärmeübergang bzw. den geänderten Temperaturabstrahlverhältnissen gehalten werden.

In die Schweißform 40 sind Konturen eingearbeitet, entlang derer die Kunststofffolien 120, 130 zusammengeschweißt werden. Die Schweißform 40 hat eine zu der Vertiefung in dem Einsatz 380 in der unteren Werkzeugplatte 100 korrespondierende Vertiefung. Die Schweißform 40 ist bevorzugterweise auswechselbar, z.B. mit Schraubverbindungen, an der oberen Werkzeugplatte 110 angebracht.

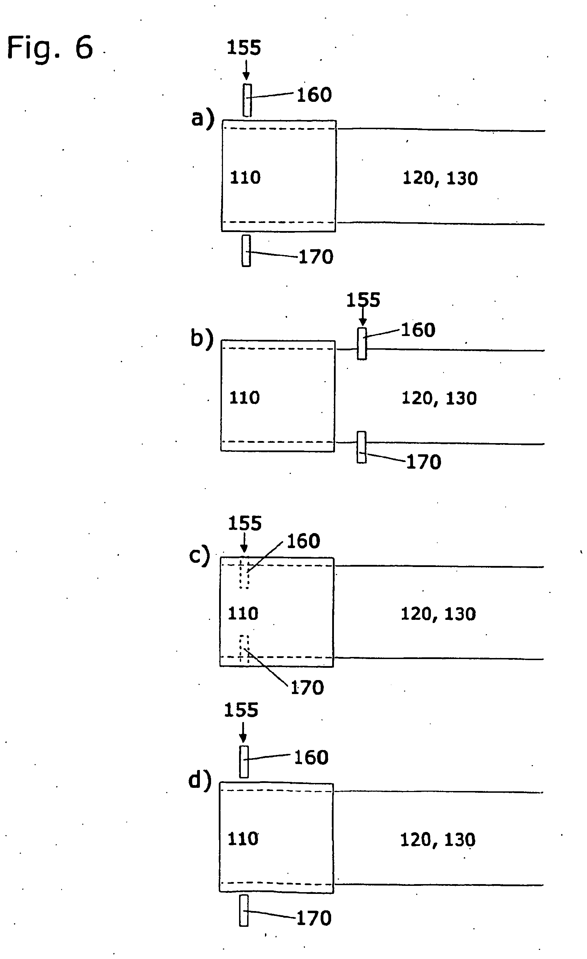

In Fig. 6 a) bis d) ist ein Schema abgebildet, das die Wirkung eines Greifsystems 155 zur Beschleunigung des Arbeitsablaufs an einem kombinierten Schweiß/Schneidwerkzeug 90 veranschaulicht. Das Schema stellt eine Sicht aus Vogelperspektive auf die obere Werkzeugplatte 110 dar.

In Fig. 6 a) ist der Zustand abgebildet, bei dem das kombinierte Schweiß/Schneidwerkzeug 90 für den Schweiß/Schneidvorgang zusammengedrückt ist und der erste Greifer 160 und der zweite Greifer 170 aus dem kombinierten Schweiß/Schneidwerkzeug 90 herausgefahren sind. Die zwei Lagen Kunststofffolie 120, 130 liegen zusammengedrückt im kombinierten Schweiß/ Schneidwerkzeug 90 und werden geschnitten und zusammengeschweißt.

In Fig. 6 b) ist der erste Greifer 160 und der zweite Greifer 170 um das kombinierte Schweiß/ Schneidwerkzeug 90 herumgeführt und greifen die Kunststofffolien 120, 130. Der Schritt des Herumführens um das kombinierte Schweiß/Schneidwerkzeug 90 geschieht noch während des Schweiß/Schneidvorgangs. Dadurch kann die Zeit bis zum erneuten Einlegen eines Kunststofffolienstücks verkürzt werden.

Nach Öffnen des kombinierten Schweiß/ Schneidwerkzeug 90, und Entnahme der geschnittenen und verschweißten Kunststoffbeutel, werden die Kunststofffolien 120, 130 von dem ersten Greifer 160 und dem zweiten Greifer 170 in das kombinierte Schweiß/ Schneidwerkzeug 90 hineingezogen. Die untere Werkzeugplatte 100 und die obere Werkzeugplatte 110 umfassen Aussparungen für den ersten Greifer 160 und den zweiten Greifer 170. Dadurch kann das kombinierte Schweiß/Schneidwerkzeug 90 geschlossen werden, während der erste Greifer 160 und der zweite Greifer 170 die Kunststofffolien 120, 130 haltern (Fig. 6 c).

Der erste Greifer 160 und der zweite Greifer 170 sind dann in Fig. 6 d) aus dem kombinierten Schweiß/ Schneidwerkzeug 90 herausgefahren, wodurch sich wieder die Ausgangssituation einstellt.

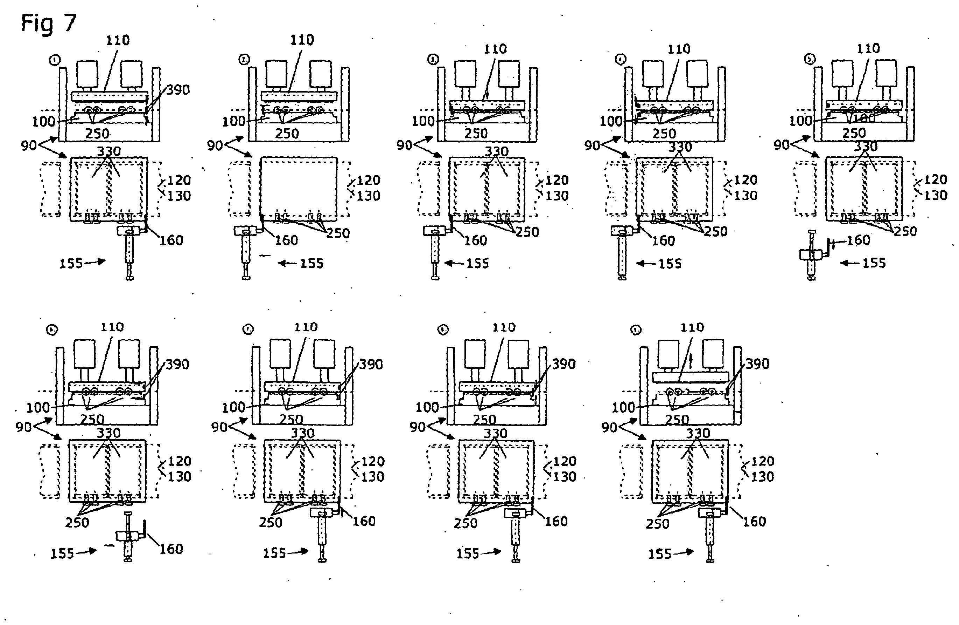

Fig. 7 Nr. 1 bis 10 zeigt detailliert den Verfahrensablauf beim kombinierten Schweiß/Schneidvorgang. Die einzelnen Arbeitsschritte werden jeweils von oben und von der Seite dargestellt.

In Nr. 1 ist das kombinierte Schweiß/Schneidwerkzeug 90 geöffnet, mit gefertigten Kunststoffbeuteln 330 gezeigt. Ein erster Greifer 160 befindet sich vor dem kombinierten Schweiß/Schneidwerkzeug und hat die zwei Lagen Kunststofffolie 120, 130 ergriffen.

In Nr. 2 ist nochmals das geöffnete kombinierte Schweiß/Schneidwerkzeug 90 dargestellt. Der erste Greifer 160 hat die zwei Lagen Kunststofffolie 120, 130 durch das kombinierte Schweiß/Schneidwerkzeug hindurchgezogen. Der erste Greifer 160 befindet sich am Ende des kombinierten Schweiß/Schneidwerkzeugs 90 und hält die zwei Lagen Kunststofffolie 120, 130 fest.

Nr. 3 zeigt das nun geschlossene kombinierte Schweiß/Schneidwerkzeug. Der erste Greifer 160 hält die Kunststofffolien 120, 130 nach wie vor fest. Der erste Greifer 160 befindet sich in einer Aussparung im kombinierten Schweiß/Schneidwerkzeug. Die Kunststofffolien 120, 130 werden durch das kombinierte Schweiß/ Schneidwerkzeug 90 zusammengedrückt.

Während der Schweiß/Schneidvorgang nun abläuft, wird der erste Greifer 160 in Nr. 4 geöffnet. In Nr. 5 wird der erste Greifer 160 aus dem kombinierten Schweiß/Schneidwerkzeug 90 herausgezogen und in Nr. 6 an den Anfang bzw. vor das kombinierte Schweiß/ Schneidwerkzeug 90 bewegt.

In Nr. 7 wird gezeigt, wie der nach wie vor geöffnete erste Greifer 160 wieder in Richtung des kombinierten Schweiß/Schneidwerkzeugs 90 hinfährt und die Kunststofffolien 120, 130 umgreift.

In Nr. 8 wird der erste Greifer 160 um die Kunststofffolien 120, 130 geschlossen.

In Nr. 9 wird das kombinierte Schweiß/Schneidwerkzeug 90 nach abgeschlossenem Schweiß/Schneidvorgang geöffnet. Die Kunststofffolien 120, 130 können dann nach Entnahme der gefertigten Kunststoffbeutel 330 sowie eventueller Überresten von Kunststofffolien 120, 130 wieder in das geöffnete kombinierte Schweiß/ Schneidwerkzeug 90 hineingezogen werden.

Der dargestellte erste Greifer 160 ist bevorzugterweise als mechanischer Greifer ausgebildet, der die Kunststofffolien zwischen zwei Fingern ergreift.

Die Bewegung des ersten Greifers 160 kann pneumatisch, hydraulisch oder mit Elektromotoren erfolgen. Die Bewegung des ersten Greifers 160 kann entlang einer Schiene erfolgen. Der zweite Greifer 170 ist ähnlich ausgebildet.

Bevorzugterweise werden die Überreste noch leicht zusammenhängend mit den gefertigten Kunststoffbeuteln 330 aus dem kombinierten Schweiß/Schneidwerkzeug 90 entnommen. Die Kunststoffbeuteln 330 werden dann außerhalb des kombinierten Schweiß/ Schneidwerkzeugs 90 von den Überresten getrennt. Die Trennung von Überresten und Kunststoffbeuteln 330 kann z.B. durch einen nichtdargestellten dritten Greifer geschehen. Der dritte Greifer ergreift die zusammenhängenden Überreste und reißt die Überreste von den auf den Nestern gehalterten Kunststoffbeuteln 330 ab.

Das in Fig. 8 abgebildete Dosierventil 190 für die Beutelfüllmaschine 300 umfasst einen Ventilstempel 230. Das Dosierventil 190 ist als Membranventil ausgebildet. Der Ventilstempel 230 drückt auf eine Membran 235. Die Membran 235 dichtet im geschlossenen Zustand des Dosierventils 190 zwei Leitungsöffnungen 240 ab. Der Raum 210 des Dosierventils 190 ist mit der zu dosierenden Flüssigkeit 200 gefüllt, die unter konstantem Druck zugegeben wird. Beim Öffnen des Dosierventils 190 strömt die Flüssigkeit 200 durch die beiden Leitungsöffnungen 240 in die beiden Zuleitungen 220. Die Flüssigkeit 200 strömt jeweils in eine Zuleitung 220 pro Port. Um das Abtropfen von Zuleitungen 220 zu vermeiden werden die Durchmesser der Zuleitungen 220 so gewählt, dass die Flüssigkeit 200 auf Grund ihrer Oberflächenspannung an der Zuleitung hängen bleiben kann. Dadurch wird ein oberer Durchmesser von ungefähr 5 mm festgelegt. Da die Zuleitungen der Reinigung zugänglich sein sollen ist der minimale Durchmesser auf ungefähr 1 mm beschränkt. Typische Innendurchmesser der Zuleitungen liegen bei ungefähr 3 mm. Größere Innendurchmesser lassen sich zwar realisieren, aber dann sind zur Vermeidung von Abtropfen Siebvorsätze notwendig. Siebvorsätze selber sind schlecht zu reinigen, müssen ausgewechselt werden und können die Flüssigkeit durch Bruchstücke des Siebes verunreinigen. Ein Dosierventil 190 wie in Fig. 8 hat eine Baugröße von ungefähr 60 mm Durchmesser bei einer Gesamtlänge von etwa 200 mm. Mehrere Dosierventile können zu einer Baugruppe zum gleichzeitigen Befüllen mehrerer Kunststoffbeutel kombiniert werden. Für den Antrieb des Dosierventils 190 stehen die bekannten Verfahren elektromagnetisch und/oder pneumatisch zur Verfügung. Die Dosierung aus dem Dosierventil 190 erfolgt bei konstantem Flüssigkeitsdruck über die Ausströmzeit, d.h. den Zeitraum in dem das Dosierventil 190 offen steht. Die erforderliche Ausströmzeit kann mittels eines Massedurchflusssystems bestimmt werden.

Vorteilhaft an der beschriebenen Ausführungsform des Dosierventils ist die Vermeidung von eventuell unterschiedlichen Schaltzeiten im Unterschied zu zwei Dosierventilen. Dadurch lassen sich Ungenauigkeiten vermeiden. Auch beim Sterilisieren der Vorrichtung 350 ergeben sich Vorteile. Bei zwei Dosierventilen könnte ein unbemerktes unvollständiges Öffnen eines der zwei Dosierventile zu einer unbemerkten unvollständigen Sterilisierung des unvollständig geöffneten. Ventils führen. Mit der beschriebenen Anordnung kann so besser erreicht werden, dass der Dampfdurchgang bei der Sterilisierung alle Bereiche gleichermaßen erreicht.

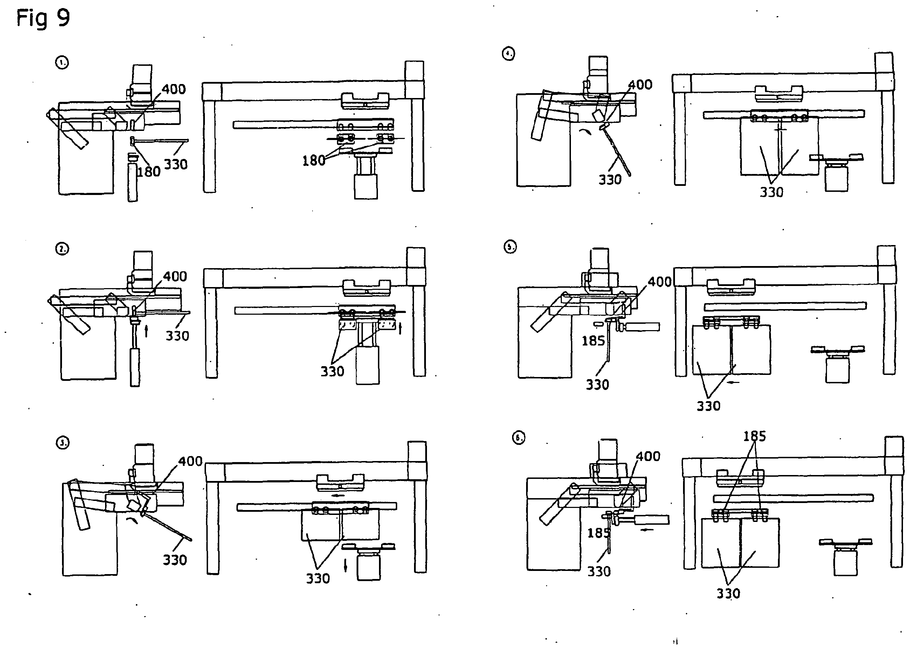

Fig. 9 Nr. 1 bis 6 zeigt den Vorgang des Schwenkens der Kunststoffbeutel 330 aus der horizontalen in die vertikale Lage mit den Ports der Kunststoffbeutel 330 nach oben. Die Drehung der Kunststoffbeutel 330 wird vor der Beutelfüllmaschine durchgeführt. Die Nr. 1 bis 6 zeigen den Vorgang jeweils in zwei Seitenansichten.

In Nr. 1 befinden sich zwei Kunststoffbeutel 330 in horizontaler Lage. Die Kunststoffbeutel sind durch die Nester 180 an den Kunststoffelementen 250 gehaltert.

Die Kunststoffbeutel 330 werden in Nr. 2. aus den Nestern 180 in einen Halter 400 geschoben.

In Nr. 3 werden die Halter 400, und damit auch die Kunststoffbeutel 330, geschwenkt.

Das Schwenken der Halter 400 ist in Nr. 5 durchgeführt.

In Nr. 6 wird gezeigt, wie die Kunststoffbeutel 330 wieder aus den Haltern 400 auf ein weiteres Nester 185 herausgeschoben werden. Die weiteren Nester 185 sind an einem zweiten Riemen angebracht.

In der vertikalen Lage können die Kunststoffbeutel 330 dann an die Beutelbefüllmaschine 300 gebracht werden.

Dieses Verfahren zum Schwenken des Kunststoffbeutels 330 vermeidet die bisherige Verwendung eines Doms, der in das Innere des Kunststoffelements hineingeschoben wurde. Dadurch könnten Verunreinigungen innerhalb des Kunststoffbeutels 330 entstehen.

### Bezugszeichenliste

- 10: Schweißwerkzeug
- 20: Untere Schweißwerkzeugplatte
- 30: ObereSchweißwerkzeugplane
- 40: Schweißform
- 50: Schneidwerkzeug
- 60: UntereSchneidwerkzeugplatte
- 70: Obere Schneidwerkzeugplatte
- 80: Schneidform
- 90: Kombiniertes Schweiß/Schneidwerkzeug
- 100: Untere Werkzeugplatte
- 110: Obere Werkzeugplatte
- 115: Aluminiumheizplatte
- 120: Kunststoffffolie
- 130: Kunststofffolie
- 140: Oberfläche der unteren Schneidwerkzeugplatte
- 150: Oberfläche der unteren Werkzeugplatte
- 155: Greifsystem
- 160: Erster Greifer
- 170: Zweiter Greifer
- 180: Nest
- 190: Dosierventil
- 200: Flüssigkeit
- 210: Raum des Dosierventils
- 220: Zuleitungen
- 230: Ventilstempel
- 235: Membran
- 240: Zuleitungsöffnungen
- 250: Kunststoffelement
- 260: Folienbedruckeinheit
- 270: Vorwärmstation
- 280: Nachschweißstation
- 290: Transferstation
- 300: Beutelfüllmaschine
- 310: Befüllvorrichtungen
- 320: Druckausgleichstank
- 330: Kunststoffbeutel
- 340: Folienspender
- 350: Vorrichtung zur Herstellung von Kunststoffbeuteln
- 360: Innere Umrandung
- 370: Äußere Umrandung
- 380: Einsatz
- 390: Finger
- 400: Halter

## Patentansprüche

1. Vorrichtung zur Herstellung von Kunststoffbeuteln (330) aus einer oder mehreren Lagen Kunststofffolie (120, 130), umfassend:
- ein kombiniertes Schweiß-/Schneidwerkzeug (90) zum Trennen und Verbinden der einen oder mehreren Lagen Kunststofffolie (120, 130), wobei die Kunststofffolie (120, 130) vom kombinierten Schweiß-/Schneidwerkzeug (90) in Abschnitte zertrennbar ist; und
- ein Transportsystem (155, 290) zum Ergreifen der einen oder mehreren Lagen Kunststofffolie (120, 130) und zum Hineinziehen der einen oder mehreren Lagen Kunststofffolie (120, 130) in das geöffnete Schweiß-/Schneidwerkzeug, wobei das Transportsystem (155, 290) am geschlossenen kombinierten Schweiß-/Schneidwerkzeug (90) vorbei geführt werden kann.

2. Vorrichtung zur Herstellung von Kunststoffbeuteln (330) nach Anspruch 1, wobei das Transportsystem (155) einen ersten Greifer (160) umfasst.

3. Vorrichtung zur Herstellung von Kunststoffbeuteln (330) nach einem der vorangehenden Ansprüche, wobei das Transportsystem (155) einen zweiten Greifer (170) umfasst.

4. Vorrichtung zur Herstellung von Kunststoffbeuteln (330) nach Anspruch 3, wobei der erste Greifer (160) auf einer Seite und/oder der zweite Greifer (170) auf einer anderen Seite des kombinierten Schweiß-/Schneidwerkzeugs (90) vorbeigeführt wird.

5. Vorrichtung zur Herstellung von Kunststoffbeuteln (330) nach einem der Ansprüche 3 bis 4, wobei der erste Greifer (160) und/oder der zweite Greifer (170) als mechanische Greifer ausgebildet sind, wobei der erste Greifer (160) und der zweite Greifer (170) die eine oder mehreren Lagen Kunststofffolie (120, 130) ergreifen können.

6. Vorrichtung zur Herstellung von Kunststoffbeuteln (330) nach einem der Ansprüche 3 bis 5, wobei das kombinierte Schweiß-/Schneidwerkzeug (90) Aussparungen umfasst, derart, dass das kombinierte Schweiß-/Schneidwerkzeug (90) geschlossen werden kann während der erste Greifer (160) und/oder der zweite Greifer (170) die eine oder mehreren Lagen Kunststofffolie (120, 130) im inneren Bereich des kombinierten Schweiß/Schneidwerkzeugs (90) haltern.

7. Vorrichtung zur Herstellung von Kunststoffbeuteln (330) nach einem der vorangehenden Ansprüche, wobei das kombinierte Schweiß-/Schneidwerkzeug (90)
i.) eine ruhende, im Wesentlichen ebene, untere Werkzeugplatte (100); und
ii.) eine bewegliche, geformte, obere Werkzeugplatte (110)
umfasst,

8. Vorrichtung zur Herstellung von Kunststoffbeuteln (330) nach Anspruch 7, wobei die untere Werkzeugplatte (100) an der Oberfläche (140, 150) harten oder gehärteten Stahl umfasst.

9. Vorrichtung zur Herstellung von Kunststoffbeuteln (330) nach einem der Ansprüche 7 und 8, wobei die untere Werkzeugplatte (100) einen oder mehrere Einsätze (380) umfasst.

10. Vorrichtung zur Herstellung von Kunststoffbeuteln (330) nach Anspruch 9, wobei der eine oder die mehreren Einsätze (380) aus einem anderen Material als die untere Werkzeugplatte (100) gefertigt sind.

11. Vorrichtung zur Herstellung von Kunststoffbeuteln (330) nach einem der Ansprüche 9 und 10, wobei die Einsätze (380) Aluminium als Material umfassen.

12. Vorrichtung zur Herstellung von Kunststoffbeuteln (330) nach einem der Ansprüche 9 bis 11, wobei die Einsätze (380) eine von der unteren Werkzeugplatte (100) getrennte Heizung umfassen.

13. Vorrichtung zur Herstellung von Kunststoffbeuteln (330) nach einem der Ansprüche 9 bis 12, wobei die Einsätze (380) in Gebrauch wärmer als die untere Werkzeugplatte (100) sind.

14. Vorrichtung zur Herstellung von Kunststoffbeuteln (330) nach einem der Ansprüche 7 bis 13, wobei die obere Werkzeugplatte (110) der Vorrichtung Trennvorrichtungen (80) für die eine oder mehreren Lagen Kunststofffolie (120, 130) umfasst, wobei die Trennvorrichtungen (80) weicher als die Oberfläche (140, 150) der unteren Werkzeugplatte (100) sind.

15. Vorrichtung zur Herstellung von Kunststoffbeuteln (330) nach einem der Ansprüche 9 bis 14, wobei die obere Werkzeugplatte (110) eine Schweißform (40) umfasst.

16. Vorrichtung zur Herstellung von Kunststoffbeuteln (330) nach Anspruch 15, wobei die Schweißform (40) aus Aluminium gefertigt ist.

17. Vorrichtung zur Herstellung von Kunststoffbeuteln (330) nach einem der Ansprüche 15 und 16, wobei die Schweißform (40) eine Heizung umfasst.

18. Vorrichtung zur Herstellung von Kunststoffbeuteln (330) nach einem der Ansprüche 15 bis 17, wobei die Trennvorrichtungen (80) lösbar an der oberen Werkzeugplatte (110) angebracht sind.

19. Verfahren zur Herstellung von Kunststoffbeuteln (330), aus einer oder mehreren Lagen Kunststofffolie (120, 130), wobei
i.) in einem kombinierten Schweiß-/Schneidwerkzeug (90) zum Trennen und Verbinden der einen oder mehreren Lagen Kunststofffolie (120, 130)
a) die eine oder mehrere Lagen Kunststofffolie (120, 130) in das kombinierte Schweiß-/Schneidwerkzeug (90) mittels einem Transportsystem (155, 190) hineingezogen und entlang einer Kontur zusammengeschweißt werden; und
b) die eine oder mehreren Lagen Kunststofffolie (120, 130) geschnitten werden, wobei die eine oder mehreren Lagen Kunststofffolie (120, 130) in Abschnitte zertrennt wird;
ii.) wobei das Transportsystem (155, 190) am geschlossenen kombinierten Schweiß-/Schneidwerkzeug (90) vorbeigeführt wird.

20. Verfahren zur Herstellung von Kunststoffbeuteln (330) nach Anspruch 19, wobei die eine oder mehreren Lagen Kunststofffolie (120, 130) durch das kombinierte Schweiß-/Schneidwerkzeug (90) im Wesentlichen horizontal eingeführt und/oder durch das kombinierte Schweiß-/Schneidwerkzeug (90) durchgeführt werden.

21. Verfahren zur Herstellung von Kunststoffbeuteln (330) nach einem der Ansprüche 19 und 20, wobei in dem kombinierten Schweiß-/Schneidwerkzeug (90) Kunststoffelemente (250) an die Kunststoffbeutel (330) angebracht werden.

22. Verfahren zur Herstellung von Kunststoffbeuteln (330) nach Anspruch 21, wobei die Kunststoffelemente (250) vor dem Anbringen an den Kunststoffbeuteln (330) im kombinierten Schweiß-/Schneidwerkzeug (90) vorgewärmt werden.

23. Verfahren zur Herstellung von Kunststoffbeuteln (330) nach Anspruch 21 oder 22, wobei im kombinierten Schweiß-/Schneidwerkzeug (90) jeweils zwei Kunststoffelemente (250) an zwei Kunststoffbeutel (330) angebracht werden.

24. Verfahren zur Herstellung von Kunststoffbeuteln (330) nach einem der Ansprüche 19 bis 23, wobei die Kunststoffbeutel (330) vor einer Beutelfüllstation (300) mit den Kunststoffelementen (250) nach oben gedreht werden.

25. Verfahren zur Herstellung von Kunststoffbeuteln (330) nach einem der Ansprüche 19 bis 24, wobei die eine oder mehreren Lagen Kunststofffolie (120, 130) bedruckt werden.

26. Verfahren zur Herstellung von Kunststoffbeuteln (330) nach einem der Ansprüche 19 bis 25, bei dem das Transportsystem (155) mit einem ersten Greifer (160) und/oder einem zweiten Greifer (170) an dem zumindest teilweise geschlossenen kombinierten Schweiß-/Schneidwerkzeug (90) vorbeifährt, die eine oder mehreren Lagen Kunststofffolie (120, 130) vor dem kombinierten Schweiß-/Schneidwerkzeug (90) ergreift und nach Öffnen des kombinierten Schweiß-/Schneidwerkzeugs (90) in das kombinierte Schweiß-/Schneidwerkzeug (90) hineinführt.

27. Verfahren zur Herstellung von Kunststoffbeuteln (330) nach Anspruch 26, bei dem der erste Greifer (160) und/oder der zweite Greifer (170) in Aussparungen beim kombinierten Schweiß-/Schneidwerkzeug (90) einfahren und die eine oder mehreren Lagen Kunststofffolie (120, 130) bis zum Schließen des kombinierten Schweiß-/Schneidwerkzeugs (90) halten.

## Claims

1. An apparatus for manufacturing plastic bags (330) from one or more layers of plastic film (120, 130) comprising:
- a combined welding/cutting tool (90) for disuniting and bonding the one or more layers of plastic film (120, 130), wherein the plastic film (120, 130) can be disunited by the combined welding/cutting tool (90) into sections; and
- a transport system (155, 290) for gripping the one or more layers of plastic film (120, 130) and for pulling the one ore more layers of plastic film (120, 130) into the opened combined welding/cutting tool (90), wherein the transport system (155, 290) is guidable around the closed welding/cutting tool (90).

2. The apparatus for manufacturing of plastic bags (330) according to claim 1, wherein the transport system (155) comprises a first gripper (160).

3. The apparatus for manufacturing of plastic bags (330) according to any one of the preceding claims, wherein the transport system (155) comprises a second gripper (170).

4. The apparatus for manufacturing plastic bags (330) according to claim 3, wherein the first gripper (160) is guided around one side and/or the second gripper (170) is guided around another side of the combined welding/cutting tool (90).

5. The apparatus for manufacturing plastic bags (330) according to any one of claims 3 to 4, wherein the first gripper (160) and/or the second gripper (170) are in the form of mechanical grippers, wherein the first gripper (160) and the second gripper (170) can grip the one or more layers of plastic film (120, 130).

6. The apparatus manufacturing plastic bags (330) according to any one of claims 3 to 5, wherein the combined welding/cutting tool (90) comprises recesses, such that the combined welding/cutting tool (90) is closable while the first gripper (160) and/or the second gripper (170) are/is holding one or more layers of plastic film (120, 130) in an inner portion of the combined welding/cutting tool (90).

7. The apparatus for manufacturing plastic bags (330) according to anyone of the preceding claims, wherein the combined welding/cutting tool (90) comprises:
i.) a static, substantially planar lower tool plate (100); and
ii.) a movable, formed upper tool plate (110).

8. The apparatus for manufacturing plastic bags (330) according to claim 7, wherein the lower tool plate (100) comprises hard or hardened steel at the surface (140, 150).

9. The apparatus for manufacturing plastic bags (330) according to any one of claims 7 and 8, wherein the lower tool plate (100) comprises one or more inserts (380).

10. The apparatus for manufacturing plastic bags (330) according to claim 9, wherein the one or more inserts (380) are made from a material different to the lower tool plate (100).

11. The apparatus for manufacturing plastic bags (330) according to any one of claims 9 and 10, wherein the inserts (380) comprise aluminium material.

12. The apparatus for manufacturing plastic bags (330) according to any one of claims 9 to 11, wherein the inserts (380) comprise a heater separated from the lower tool plate (100).

13. The apparatus for manufacturing plastic bags (330) according to any one of claims 9 to 12, wherein the inserts (380), when in use are warmer than the lower tool plate (100).

14. The apparatus for manufacturing plastic bags (330) according to any one of claims 7 to 13, wherein the upper tool plate (110) of the apparatus comprises separators (80) for the one or more layers of plastic film (120, 130), wherein the separators (80) are softer than a surface (140, 150) of the lower tool plate (100).

15. The apparatus for manufacturing plastic bags (330) according to any one of claims 7 to 14, wherein the upper tool plate (110) comprises a welding form (40).

16. The apparatus for manufacturing plastic bags (330) according to claim 15, wherein the welding form (40) is made from aluminium.

17. The apparatus for manufacturing plastic bags (330) according to any one of claims 15 and 16, wherein the welding form (40) comprises a heater.

18. The apparatus for manufacturing plastic bags (330) according to any one of claims 15 to 17, wherein the separators (80) are detachably arranged on the upper tool plate (110).

19. A method for manufacturing plastic bags (330) from one or more layers of plastic foils (120, 130), wherein
i.) in a combined welding/cutting tool (90) for disuniting and bonding the one or more layers of plastic film (120, 130)
a) the one or more layers of plastic foil (120, 130) are pulled into the combined welding/cutting tool (90) by means of a transport system (155, 190) and being welded on a contour; and
b) the one or more layers of plastic foil (120, 130) are cut, disuniting the one or more layers of plastic foil (120, 130) into sections;
ii.) wherein the transport system (155, 290) is guided around the closed welding/cutting tool (90).

20. The method for manufacturing plastic bags (330) according to claim 19, wherein the one or more layers of plastic film (120, 130) are substantially horizontally introduced through the combined welding/cutting tool (90) and/or fed through the combined welding/cutting tool (90).

21. The method for manufacturing plastic bags (330) according to any one of claims 19 and 20, wherein plastic elements (250) are attached to the plastic bags (330) in the combined welding/cutting tool (90).

22. The method for manufacturing plastic bags (330) according to claim 21, wherein the plastic elements (250) are preheated before being attached to the plastic bags (330) in the combined welding/cutting tool (90).

23. The method for manufacturing plastic bags (330) according to any one of claims 21 and 22, wherein within the combined welding/cutting tool (90) two plastic elements (250) are attached to two plastic bags (330) respectively.

24. The method for manufacturing plastic bags (330) according to any one of claims 19 to 23, wherein the plastic bags (330) are rotated with the ports upwards before a filling station (300).

25. The method for manufacturing plastic bags (330) according to any one of claims 19 to 24, wherein the one or more layers of plastic film (120, 130) are printed.

26. The method for manufacturing plastic bags (330) according to any one of claims 19 to 25, wherein the transport system (155) with a first gripper (160) and/or a second gripper (170), passing by the at least partially closed combined welding/cutting tool (90), gripping the one or more layers of plastic film (120, 130) before the combined welding/cutting tool (90), and introduces the one or more layers of plastic film (120,130) into the combined welding/cutting tool (90) after opening the combined welding/cutting tool (90).

27. The method for manufacturing plastic bags (330) according to claim 26, wherein the first gripper (160) and/or the second gripper are introduced into the recesses of the combined welding/cutting tool (90) and hold the one or more layers of plastic film (120, 130) until closing of the combined welding/cutting tool (90).

## Revendications

1. Dispositif de production de poches plastiques (330) à partir d'une ou plusieurs couches de feuilles en matière plastique (120, 130), comprenant
un outil de soudage/coupe combiné (90) pour disjoindre et lier les une ou plusieurs couches de feuilles en matière plastique (120, 130), les une ou plusieurs couches de feuilles en matière plastique (120, 130) pouvant être disjointes en sections par l'outil de soudage/coupe combiné (90),
un système de transport (155, 290) pour attraper la une ou plusieurs couches de feuilles en matière plastique (120, 130), et entraîner la une ou plusieurs couches de feuilles en matière plastique (120, 130) dans l'outil de soudage/coupe combiné (90) ouvert, ledit système de transport (155, 290) pouvant être conduit le long de l'outil de soudage/coupe combiné (90) fermé.

2. Dispositif de production de poches en matière plastique (330) selon la revendication 1, dans lequel le système de transport (155) comprend une première prise (160).

3. Dispositif de production de poches en matière plastique (330) selon l'une des revendications précédentes, dans lequel le système de transport (155) comprend une deuxième prise (170).

4. Dispositif de production de poches en matière plastique (330) selon la revendication 3, dans lequel la première prise (160) passe le long d'un côté et/ou la deuxième prise (170) passe le long d'un autre côté de l'outil de soudage/coupe combiné (90).

5. Dispositif de production de poches en matière plastique (330) selon l'une des revendications 3 à 4, dans lequel la première prise (160) et/ou la deuxième prise (170) sont façonnées comme des prises mécaniques, la première prise (160) et la deuxième prise (170) pouvant saisir les une ou plusieurs couches de feuilles en matière plastique (120, 130).

6. Dispositif de production de poches en matière plastique (330) selon l'une des revendications 3 à 5, dans lequel l'outil de soudage/coupe combiné (90) comprend des évidements, de sorte que l'outil de soudage/coupe combiné (90) peut être fermé pendant que la première prise (160) et/ou la deuxième prise (170) soutiennent les une ou plusieurs couches de feuilles en matière plastique (120, 130) dans une zone interne de l'outil de soudage/coupe combiné (90).

7. Dispositif de production de poches en matière plastique (330) selon l'une quelconque des revendications précédentes, dans lequel l'outil de soudage/coupe combiné (90) comprend
i.) une plaque outil inférieure (100) statique, essentiellement plate
ii.) une plaque outil supérieure (110) formée mobile.

8. Dispositif de production de poches en matière plastique (330) selon la revendication 7, dans lequel la plaque outil inférieure (100) comprend sur les surfaces (140, 150) de l'acier dur ou trempé.

9. Dispositif de production de poches en matière plastique (330) selon l'une des revendications 7 et 8, dans lequel la plaque outil inférieure (100) comprend une ou plusieurs pièces rapportées (380).

10. Dispositif de production de poches en matière plastique (330) selon la revendication 9, dans lequel les une ou plusieurs pièces rapportées (380) est/sont fabriquée(s) en un autre matériau que celui de la plaque outil inférieure.

11. Dispositif de production de poches en matière plastique (330) selon l'une des revendications 9 et 10, dans lequel les pièces rapportées (380) comprennent comme matériau de l'aluminium.

12. Dispositif de production de poches en matière plastique (330) selon l'une des revendications 9 à 11, dans lequel les pièces rapportées (380) comprennent un chauffage séparé de la plaque outil inférieure (100).

13. Dispositif de production de poches en matière plastique (330) selon l'une des revendications 9 à 12, dans lequel les pièces rapportées (380) sont plus chaudes en usage que la plaque outil inférieure (100).

14. Dispositif de production de poches en matière plastique (330) selon l'une des revendications 7 à 13, dans lequel la plaque outil supérieure (110) du dispositif (350) comprend des dispositifs de séparation (80) pour une ou plusieurs couches de feuilles en matière plastique (120, 130), les dispositifs de séparation (80) étant plus mous que les surfaces (140, 150) de la plaque outil inférieure (100).

15. Dispositif de production de poches en matière plastique (330) selon l'une des revendications 7 à 14, dans lequel la plaque outil supérieure (110) comprend une forme de soudage (40).

16. Dispositif de production de poches en matière plastique (330) selon la revendication 15, dans lequel le moule de soudage (40) est fabriquée en aluminium.

17. Dispositif de production de poches en matière plastique (330) selon l'une des revendications 15 et 16, dans lequel le moule de soudage (40) comprend un chauffage.

18. Dispositif de production de poches en matière plastique (330) selon l'une des revendications 15 à 17, dans lequel les dispositifs de séparation (80) sont placé détachable au niveau de la plaque outil supérieure (110).

19. Procédé de production de poches en matière plastique (330), à partir d'une ou plusieurs couches de feuilles en matière plastique (120, 130), dans lequel
i.) dans un outil de soudage/coupe combiné (90)
a) les une ou plusieurs couches de feuilles en matière plastique (120, 130) sont entrainées dans l'outil de soudage/coupe combiné (90) au moyen d'un système de transport (155, 190) et sont soudées ensemble sur un contour; et
b) les une ou plusieurs couches de feuilles en matière plastique (120, 130) sont découpées, les une ou plusieurs couches de feuilles en matière plastique (120, 130) étant disjointes en sections ;
ii.) le système de transport _(155, 190) étant conduit à l'outil de soudage/coupe combiné (90) fermé.

20. Procédé de production de poches en matière plastique (330) selon la revendication 19, dans lequel les une ou plusieurs couches de feuille en matière plastique (120, 130) est/sont engagée(s) sensiblement horizontalement à travers l'outil de soudage/coupe combiné (90) et/ou conduite(s) à travers l'outil de soudage/coupe combiné (90).

21. Procédé de production de poches en matière plastique (330) selon l'une des revendications 19 à 20, dans lequel des éléments en matière plastique (250) sont placés au niveau des poches en matière plastique (330) dans l'outil de soudage/coupe combiné (90).

22. Procédé de production de poches en matière plastique (330) selon la revendication 21, dans lequel les éléments en matière plastique (250) sont préchauffés avant d'être placés au niveau des poches en matière plastique (330) dans l'outil de soudage/coupe combiné (90).

23. Procédé de production de poches en matière plastique (330) selon la revendication 21 ou 22, dans lequel respectivement deux éléments en matière plastique (250) sont placés sur deux poches en matière plastique (330) dans l'outil de soudage/coupe combiné (90).

24. Procédé de production de poches en matière plastique (330) selon l'une des revendications 19 à 23, dans lequel les poches en matière plastique (330) sont tournées avec les éléments en plastique vers le haut avant une station de remplissage (300).

25. Procédé de production de poches en matière plastique (330) selon l'une des revendications 19 à 24, dans lequel les une ou plusieurs couches de feuilles en matière plastique (120, 130) est/sont imprimée(s).

26. Procédé de production de poches en matière plastique (330) selon l'une des revendications 19 à 25, dans lequel le système de transport (155) avec une première prise (160) et/ou une deuxième prise (170) passe à côté de l'outil de soudage/coupe combiné au moins partiellement fermé (90), saisit les une ou plusieurs couches de feuilles en matière plastique (120, 130) devant l'outil de soudage/coupe combiné (90) et conduit dans l'outil de soudage/coupe combiné (90) après ouverture de l'outil de soudage/coupe combiné (90).

27. Procédé de production de poches en matière plastique (330) selon la revendication 26, dans lequel la première prise (160) et/ou la deuxième prise (170) entre(nt) dans des évidements dans l'outil de soudage/coupe combiné (90) et maintient/maintiennent les une ou plusieurs couches de feuille en matière plastique jusqu'à la fermeture de l'outil de soudage/coupe combiné (90).
